# EUROPÄISCHE PATENTSCHRIFT

(11) **EP 4 625 894 B1**
(45) Veröffentlichungstag und Bekanntmachung des Hinweises auf die Patenterteilung: **29.04.2026**
(21) Anmeldenummer: 24166758.3
(22) Anmeldetag: 27.03.2024
(51) Int. Cl.: H04L 12/413

(54) **VORRICHTUNG ZUM ANSCHLUSS EINES KOMMUNIKATIONSGERÄTS AN EIN 2-DRAHT- ODER AN EIN 8-ADER-ETHERNET-KOMMUNIKATIONSSYSTEM UND KOMMUNIKATIONSGERÄT**
DEVICE FOR CONNECTING A COMMUNICATION DEVICE TO A 2-WIRE OR AN 8-WIRE ETHERNET COMMUNICATION SYSTEM AND COMMUNICATION DEVICE
DISPOSITIF DE CONNEXION D'UN DISPOSITIF DE COMMUNICATION À UN SYSTÈME DE COMMUNICATION ETHERNET À 2 FILS OU À UN SYSTÈME DE COMMUNICATION ETHERNET À 8 FILS ET DISPOSITIF DE COMMUNICATION

(43) Veröffentlichungstag der Anmeldung: 01.10.2025
(73) Patentinhaber: Siemens Aktiengesellschaft, 80333 München (DE)
(72) Erfinder: Blaich, Wolfgang, 76275 Ettlingen (DE); Kasper, Michael, 90411 Nürnberg (DE); Schmidt, Benjamin, 74722 Buchen (DE); Wagner, Michael, 66606 St. Wendel (DE)
(74) Vertreter: Siemens Patent Attorneys

(56) Entgegenhaltungen:
- US-A1- 2002 188 790
- US-A1- 2006 259 798
- US-A1- 2014 303 757

## Beschreibung

Die vorliegende Erfindung betrifft eine Vorrichtung zum Anschluss eines Kommunikationsgeräts, insbesondere eines Switches oder eines Feldgeräts innerhalb eines industriellen Automatisierungssystems, an ein 2-Draht- oder an ein 8-Ader-Ethernet-Kommunikationssystem und ein Kommunikationsgerät zum Anschluss an ein 2-Draht- oder an ein 8-Ader-Ethernet-Kommunikationssystem. Dabei umfasst das Kommunikationsgerät obige Vorrichtung.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden. Dies wird beispielhaft auch in der Offenbarung US 2014/303757 A1 gezeigt.

Ethernet Advanced Physical Layer (Ethernet APL) stellt eine OSI Layer 1 Erweiterung dar, die speziell Anforderungen in der Prozessindustrie Rechnung trägt. Dabei steht insbesondere eine Kommunikation mit hoher Geschwindigkeit über große Entfernungen sowie 2-adrige Kabel und Schutzmaßnahmen für einen sicheren Betrieb innerhalb explosionsgefährdeter Bereiche im Vordergrund. Als Barriere zur Realisierung von Eigensicherheit ist jeweils eine elektronische Schaltung an Ausgängen bzw. Eingängen von Switchen und Feldgeräten vorgesehen. Derartige Schaltungen verhindern, dass zündfähige elektrische Energie in Anschlüsse gelangt. Insbesondere müssen Geräte, die in explosionsgefährdeten Bereichen betrieben werden, durch eine Schutzart gemäß Normenreihe IEC60079 geschützt werden. Hierdurch wird sichergestellt, dass eine explosive Umgebung selbst in einem mehrfachen Fehlerfall nicht durch heiße Oberflächen oder Funkenerzeugung entzündet werden kann. Dies erfolgt durch eine sichere Begrenzung von Spannungen und/oder Strömen in eigensicher ausgestalteten Schaltkreisen.

Um Ethernet-Technologie auch in industriellen Automatisierungssystemen nutzen zu können, wird eine DE 100 53 843 C1 eine RJ45-basierte Steckverbindung vorgeschlagen, die eine Spannungsversorgung von angeschlossenen Sensoren oder Aktoren ermöglicht. Hierfür sind zusätzliche Kontakte zur Spannungsversorgungseinspeisung als integraler Bestandteil der Steckverbindung vorgesehen. Buchsenseitig wird eine RJ45-Standardbuchse um einen Isolierkörper erweitert, der zwei Kontaktflächen aufweist. Steckerseitig sind zusätzlich zwei korrespondierende Kontaktelemente angebracht, die mit buchsenseitigen Steckverbindungselementen in Kontakt sind. Auf diese Weise ist eine Nutzung von RJ45-basierten Steckverbindungen in industriellen Automatisierungssystemen möglich, und zwar insbesondere unter Beibehaltung bestehender Crimpverbindungstechniken und Verfahren zur Wellenwiderstandsanpassung.

In EP 2 784 977 A1 ist eine Kopplereinheit zur Energie- und Datenübertragung in explosionsgefährdeten Umgebungen über Ethernet-Leitungen beschrieben. Die Kopplereinheit weist einen versorgungsseitigen Anschluss für zumindest vieradrige Ethernet-Leitungen zur kombinierten Energie- und Datenübertragung auf. Mit dem versorgungsseitigen Anschluss ist eine Weicheneinheit zur frequenzselektiven Auskopplung eines über eine versorgungsseitige Ethernet-Leitung übertragenen Datensignals und eines Versorgungsstroms verbunden. Verbraucherseitig ist ein Anschluss für Ethernet-Leitungen zur kombinierten Energie- und Datenübertragung über zwei Adern vorgesehen. Mit dem verbraucherseitigen Anschluss ist eine Mischereinheit zur frequenzselektiven Ankopplung eines über eine verbraucherseitigen Ethernet-Leitung zu übertragenden Datensignals und eines geregelten Versorgungsstroms an ein gemeinsames Adernpaar verbunden. Die Kopplereinheit ermöglicht eine Adaption von nicht eigensicherem Power over Ethernet auf eigensicheres Power over Ethernet, das über zweiadrige Leitungen bereitgestellt wird.

Aus EP 4 113 910 A1 ist bekannt, dass zur galvanischen Trennung zumindest eines an ein 2-Draht-Ethernet-Bussystem anschließbaren Geräts eine Uplink- und eine Downlink-PHY-Schnittstellenvorrichtung vorgesehen sind, die jeweils eine Sendeeinheit und eine Empfangseinheit umfassen. Die Empfangseinheiten weisen jeweils zwei Ausgangsanschlüsse zur Bereitstellung eines empfangenen ternär codierten Signals als Differenzsignal auf. Zusätzlich sind eine Uplink- und eine Downlink-Signalsplit-Vorrichtung vorgesehen, die jeweils mit den Ausgangsanschlüssen einer zugeordneten Empfangseinheit verbunden sind und zur Aufteilung eines als Differenzsignal bereitgestellten ternär codierten Signals in zwei binäre codierte Signale ausgestaltet sind. Darüber hinaus sind eine Uplink- und eine Downlink-Optokopplervorrichtung vorgesehen, die jeweils mit einer zugeordneten Signalsplit-Vorrichtung verbunden sind und zur Übertragung von zwei empfangenen binär codierten Signalen an eine Sendeeinheit einer zugeordneten PHY-Schnittstellenvorrichtung ausgestaltet sind.

Für Ethernet-Kommunikation auf Basis von Kupferverbindungen werden sehr häufig RJ45-Steckverbinder gemäß IEC 60603-7 in Kombination mit 2- oder 4-paarigen Kabeln entsprechend IEC 61156-5 verwendet. Anderseits sind auch 2-Draht-Leitungsverbindungen stark verbreitet, insbesondere in bestehenden Installationen. Als Schnittstelle für 1-paarige Kabel entsprechend ISO/IEC 11801 sind originär Stecker gemäß IEC 61171 vorgesehen, die jedoch nicht kompatibel zu oben genannten, weitverbreiteten Steckverbindern gemäß IEC 60603-7 sind. Bislang gibt es keine Kommunikationsgeräte, die eine Verwendung sowohl von 2-oder 4-paarigen Kabeln als auch von 1-paarigen Kabeln bzw. Single Pair Ethernet (SPE) an einer einheitlichen Schnittstelle ermöglichen. Daher kann Single Pair Ethernet in Netzwerke mit bestehender 2- oder 4-paariger Verkabelung nur mit erheblichem Zusatzaufwand integriert werden.

Der vorliegenden Erfindung liegt daher die Aufgabe zugrunde, eine Lösung zu schaffen, die eine einfache Verwendung sowohl von 2- oder 4-paarigen Kabeln als auch von 1-paarigen Kabeln bzw. Single Pair Ethernet (SPE) an einer einheitlichen Schnittstelle ermöglicht und einen hierfür bisher erforderlichen Zusatzaufwand vermeidet.

Diese Aufgabe wird erfindungsgemäß durch eine Vorrichtung mit den in Anspruch 1 angegebenen Merkmalen und durch ein Kommunikationsgerät mit den in Anspruch 12 angegebenen Merkmalen gelöst. Vorteilhafte Weiterbildungen der vorliegenden Erfindung sind in den abhängigen Patentansprüchen angegeben.

Die erfindungsgemäße Vorrichtung zum Anschluss eines Kommunikationsgeräts an ein 2-Draht- oder an ein 8-Ader-Ethernet-Kommunikationssystem umfasst ein Schnittstellenelement zur Verbindung mit einer 8 Kontakte umfassenden Anschlussbuchse für einen mit einer Kommunikationsleitung verbundenen Stecker. Außerdem ist ein mit dem Schnittstellenelement verbundenes und mit dem Kommunikationsgerät verbindbares Steuerungselement zur Erzeugung zumindest eines Signals für eine Umschaltung eines Betriebsmodus des Kommunikationsgeräts vorgesehen. Das Schnittstellenelement und das Steuerungselement können beispielsweise als in ein Kommunikationsgerät integrierte Komponenten ausgestaltet sein.

Vorteilhafterweise umfasst das Schnittstellenelement eine galvanische Trennung gegenüber der Anschlussbuchse. Darüber hinaus kann das Schnittstellenelement zur Verbindung mit gemultiplexten Versorgungs- und Kommunikationsleitungen ausgestaltet sein, die zur gleichzeitigen Energie- und Datenübertragung vorgesehen sind. Vorzugsweise sind das Schnittstellenelement und das Steuerungselement auch für Ethernet Advanced Physical Layer ausgestaltet.

Das Steuerungselement ist erfindungsgemäß zur Ermittlung einer Belegung der Kontakte der Anschlussbuchse durch einen in die Anschlussbuchse gesteckten Stecker eingerichtet. Ferner ist das Steuerungselement dazu eingerichtet, zumindest bei Belegung eines ersten und zweiten Kontakts sowie eines dritten und sechsten Kontakts ein erstes Signal für einen Ethernet-Betriebsmodus des Kommunikationsgeräts mit mehreren Aderpaaren zu erzeugen. Insbesondere kann das Steuerungselement dazu eingerichtet sein, bei Belegung des ersten und zweiten Kontakts, des dritten und sechsten Kontakts, eines vierten und fünften Kontakts sowie eines siebten und achten Kontakts das erste Signal zu erzeugen.

Vorzugsweise ist die Anschlussbuchse ein RJ45-Steckverbindungselement, wobei die Kontakte des Anschlussbuchse hinsichtlich ihrer Nummerierung RJ45-Pin-Positionen entsprechen. Darüber hinaus ist die Anschlussbuchse vorteilhafterweise zur Aufnahme von Steckern entsprechend IEC 60603-7 ausgestaltet.

Erfindungsgemäß ist das Steuerungselement dazu eingerichtet, bei Belegung nur des dritten und sechsten Kontakts ein zweites Signal für einen 2-Draht-Betriebsmodus des Kommunikationsgeräts zu erzeugen. Vorzugsweise ist das Steuerungselement auch dazu eingerichtet, das erzeugte erste oder zweite Signal an das Kommunikationsgerät zu senden. Mit der vorliegenden Erfindung lässt sich eine weltweit verbreitete Standard-Kommunikationsschnittstelle, die üblicherweise für 2- oder 4-paarige Kupferkabel verwendet wird, auch für Single Pair Ethernet-Kommunikation nutzen. Insbesondere kann diese Standard-Kommunikationsschnittstelle mittels Adapterleitung auf Single Pair Ethernet-Schnittstellen umsetzen. Für Single Pair Ethernet müssen somit in Netzwerkkomponenten keine speziellen Schnittstellen integriert werden, die nur zur Single Pair Ethernet-Kommunikation genutzt werden können.

Entsprechend einer bevorzugten Ausgestaltung der vorliegenden Erfindung erfolgt eine Datenübermittlung im Ethernet-Betriebsmodus mit mehreren Aderpaaren entsprechend einem Ethernet-Standard für Kupferkabel mit mindestens 4 Adern, während die Datenübermittlung im 2-Draht-Betriebsmodus entsprechend einem Single Pair Ethernet-Standard erfolgt. Vorteilhafterweise wird durch die Umschaltung des Betriebsmodus eine Kommunikation gemäß ISO/IEC 11801 für 1-, 2- und 4-paarige Kupferverbindungen unterstützt.

Das erfindungsgemäße Kommunikationsgerät zum Anschluss an ein 2-Draht- oder an ein 8-Ader-Ethernet-Kommunikationssystem umfasst eine Vorrichtung entsprechend vorangehenden Ausführungen und somit ein Schnittstellenelement sowie ein Steuerungselement. Außerdem umfasst das Kommunikationsgerät zumindest eine 8 Kontakte umfassende Anschlussbuchse für einen mit einer Kommunikationsleitung verbundenen Stecker und zumindest eine Sicherungsschicht-Funktionseinheit, beispielsweise einen MAC-Schaltkreis (Medium Access Control). Die Anschlussbuchse des Kommunikationsgeräts ist mit dem Schnittstellenelement verbunden, während die Sicherungsschicht-Funktionseinheit mit dem Schnittstellenelement und mit dem Steuerungselement verbunden ist. Darüber hinaus ist die Sicherungsschicht-Funktionseinheit dazu eingerichtet, bei Empfang eines ersten Signals vom Steuerungselement einen Ethernet-Betriebsmodus mit mehreren Aderpaaren einzustellen und bei Empfang eines zweiten Signals vom Steuerungselement einen 2-Draht-Betriebsmodus einzustellen. Das Kommunikationsgerät kann insbesondere ein Switch mit mehreren Anschlussbuchsen oder ein Feldgerät eines industriellen Automatisierungssystems sein.

Die vorliegende Erfindung wird nachfolgend an einem Ausführungsbeispiel anhand der Zeichnung näher erläutert. Es zeigt
- Figur 1: eine Darstellung einer bestehenden Kontakt-Belegung an Steckverbindungen für 2-bzw. 4-paarige Ethernet-Kupferkabel,
- Figur 2: eine Darstellung einer vorgeschlagenen Kontakt-Belegung an Steckverbindungen für Single Pair Ethernet,
- Figur 3: eine schematische Darstellung eines Kommunikationsgeräts zum wahlweisen Anschluss an ein 2-Draht- oder an ein 4-/8-Ader-Ethernet-Kommunikationssystem.

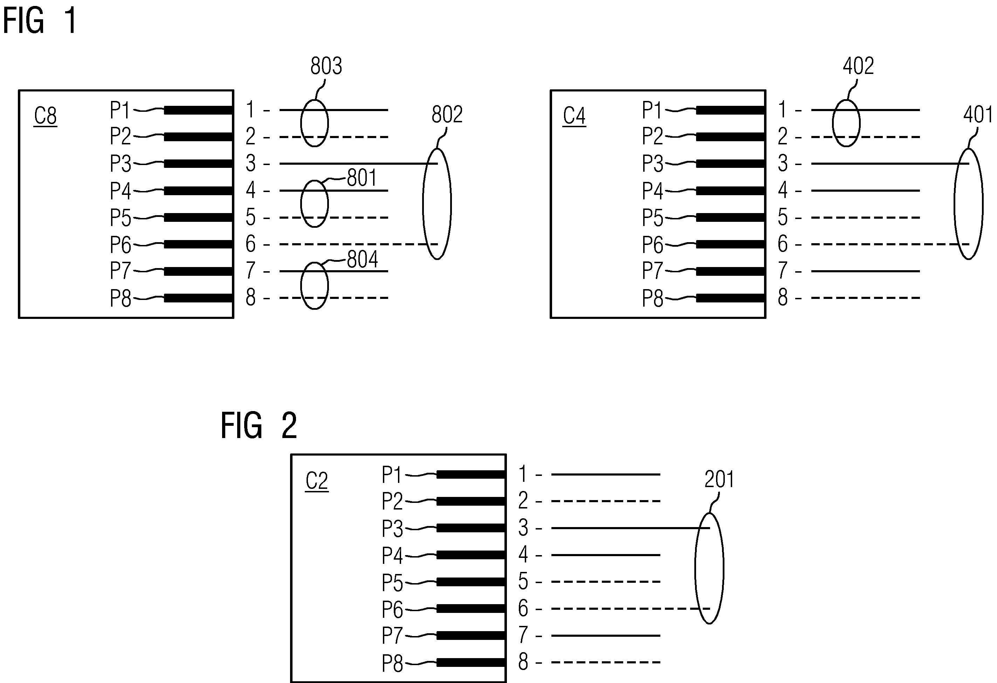

In Figur 1 sind ein mit 4 Aderpaaren 801-804 belegter RJ45-Stecker C8 und ein mit 2 Aderpaaren 401-402 belegter RJ-Stecker C4 einer Steckerverbindungen für 2- bzw. 4-paarige Ethernet-Kupferkabel dargestellt. Die Stecker C8 und C4 umfassen jeweils 8 Kontakte P1-P8, die hinsichtlich ihrer Nummerierung üblichen RJ45-Pin-Positionen entsprechen. Die Aderpaare 801-804, 401-402 können beispielsweise Farbcodierungen entsprechend Standard EIA/TIA-568A oder EIA/TIA-568B aufweisen.

Beim vorzugsweise entsprechend Norm IEC 60603-7 ausgestalteten Stecker C8 für 4-paarige Ethernet-Kupferkabel sind
- ein vierter P4 und fünfter Kontakt P5 mit einem ersten Anschlusspaar 801,
- ein dritter P3 und sechster Kontakt P6 mit einem zweiten Anschlusspaar 802,
- ein erster P1 und zweiter Kontakt P2 mit einem dritten Anschlusspaar 803 sowie
- ein siebter P7 und achter Kontakt P8 mit einem vierten Anschlusspaar 804 belegt.

Demgegenüber sind beim vorzugsweise ebenfalls entsprechend der Norm IEC 60603-7 ausgestalteten Stecker C4 für 2-paarige Ethernet-Kupferkabel
- der dritte P3 und sechste Kontakt P6 mit einem ersten Anschlusspaar 401 sowie
- der erste P1 und zweite Kontakt P2 mit einem zweiten Anschlusspaar 402 belegt.

Damit sowohl für 2- oder 4-paarige Ethernet-Kupferkabel als auch von 1-paarige Ethernet-Kupferkabel an einer einheitlichen Schnittstelle bzw. an einheitlichen Anschlussbuchsen verwendet werden können, wird für 1-paarige Ethernet-Kupferkabel bzw. Single Pair Ethernet eine Kontakt-Belegung an Steckverbindungen entsprechend Figur 2 vorgeschlagen. Dort ist ein mit einem Aderpaar 201 belegter RJ45-Stecker C2 dargestellt, der ebenfalls 8 Kontakte P1-P8 umfasst, die hinsichtlich ihrer Nummerierung den üblichen RJ45-Pin-Positionen entsprechen. Beim vorzugsweise ebenfalls entsprechend der Norm IEC 60603-7 ausgestalteten Stecker C2 für 1-paarige Ethernet-Kupferkabel sind der dritte P3 und sechste Kontakt P6 mit einem ersten und einzigen Anschlusspaar 201 belegt.

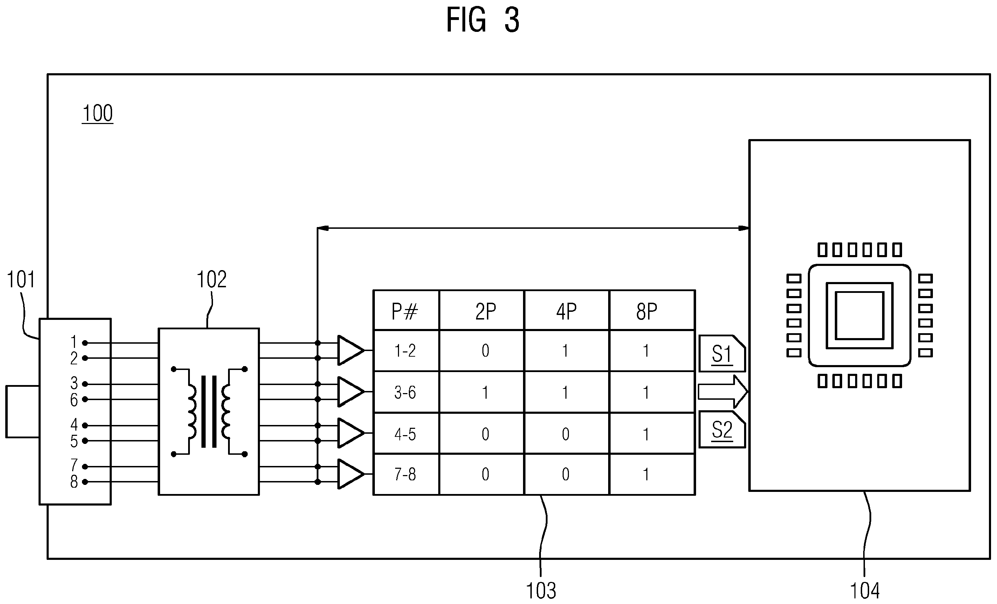

Alle Stecker C8, C4 und C2 können an dem in Figur 3 dargestellten Kommunikationsgerät 100 genutzt werden, das durch nachstehend erläuterte Betriebsmodus-Umschaltung eine Kommunikation gemäß Norm ISO/IEC 11801 für 1-, 2- und 4-paarige Kupferverbindungen unterstützt. Hierzu weist das Kommunikationsgerät eine integrierte Vorrichtung zum Anschluss eines Kommunikationsgeräts 100 an ein 2-Draht- oder an ein 4-/8-Ader-Ethernet-Kommunikationssystem auf. Diese integrierte Vorrichtung umfasst wiederum ein Schnittstellenelement 102 zur Verbindung mit einer Anschlussbuchse 101 des Kommunikationsgeräts 100 und ein mit dem Schnittstellenelement 102 verbundenes Steuerungselement 103. Das Schnittstellenelement 102 umfasst vorzugsweise eine galvanische Trennung gegenüber der Anschlussbuchse 101. Das Kommunikationsgerät 100 kann beispielsweise ein Switch mit mehreren Anschlussbuchsen oder ein Feldgerät eines industriellen Automatisierungssystems sein.

Die Anschlussbuchse 101 des Kommunikationsgeräts 100 ist ein RJ45-Steckverbindungselement und umfasst 8 Kontakte 1-8 für einen mit einer Kommunikationsleitung verbundenen Stecker C8, C4, C2 entsprechend vorangehenden Ausführungen. Dementsprechend sind die Kontakte Abschlussbuchse 101 wie Kontakte P1-P8 der Stecker C8, C4, C2 nummeriert. Vorzugsweise ist die Anschlussbuchse 101 ist zur Aufnahme von Steckern entsprechend der Norm IEC 60603-7 ausgestaltet.

Das Steuerungselement 103 ist mit einer Sicherungsschicht-Funktionseinheit 104 des Kommunikationsgeräts 100 verbunden und dient zur Erzeugung von Signalen S1, S2 für eine Umschaltung eines Betriebsmodus des Kommunikationsgeräts 100. Die Sicherungsschicht-Funktionseinheit 104 ist auch mit dem Schnittstellenelement 102 verbunden und kann beispielsweise ein MAC-Schaltkreis (Medium Access Control) sein.

Das Steuerungselement 103 ist zur Ermittlung einer Belegung der Kontakte der Anschlussbuchse 101 durch einen in die Anschlussbuchse 101 gesteckten Stecker C8, C4, C2 eingerichtet. Zumindest bei Belegung des ersten 1 und zweiten Kontakts 2 sowie des dritten 3 und sechsten Kontakts 6 der Anschlussbuchse 101 erzeugt das Steuerungselement 103 ein erstes Signal S1 für einen Ethernet-Betriebsmodus des Kommunikationsgeräts 100 mit mehreren Aderpaaren. Insbesondere wird das erste Signal S1 auch dann erzeugt, wenn eine Belegung des ersten 1 und zweiten Kontakts 3, des dritten 3 und sechsten Kontakts 6, eines vierten 4 und fünften Kontakts 5 sowie eines siebten 7 und achten Kontakts 8 vorliegt. Somit wird im vorliegenden Ausführungsbeispiel das erste Signal S1 erzeugt, wenn der Stecker C8 oder C4 in die Anschlussbuchse 101 gesteckt wird.

Darüber hinaus ist das Steuerungselement 103 dazu eingerichtet, bei Belegung nur des dritten 3 und sechsten Kontakts 6 ein zweites Signal S2 für einen 2-Draht-Betriebsmodus des Kommunikationsgeräts 100 zu erzeugen. Im vorliegenden Ausführungsbeispiel wird also das zweite Signal S2 erzeugt, wenn der Stecker C2 in die Anschlussbuchse 101 gesteckt wird. Ferner ist das Steuerungselement 103 dazu eingerichtet, das erzeugte erste S1 oder zweite Signal S2 an die Sicherungsschicht-Funktionseinheit 104 des Kommunikationsgeräts 100 zu senden. Demgegenüber ist die Sicherungsschicht-Funktionseinheit 104 dazu eingerichtet, bei Empfang des ersten Signals S1 vom Steuerungselement 103 einen Ethernet-Betriebsmodus mit mehreren Aderpaaren 401-402, 801-804 einzustellen und bei Empfang des zweiten Signals S2 vom Steuerungselement 103 einen 2-Draht-Betriebsmodus einzustellen. Insbesondere erfolgt eine Datenübermittlung im Ethernet-Betriebsmodus mit mehreren Aderpaaren 401-402, 801-804 entsprechend einem Ethernet-Standard für Kupferkabel mit mindestens 4 Adern, während die Datenübermittlung im 2-Draht-Betriebsmodus entsprechend einem Single Pair Ethernet-Standard erfolgt.

Entsprechend einer vorteilhaften Ausgestaltung ist das Schnittstellenelement 102 zur Verbindung mit gemultiplexten Versorgungs- und Kommunikationsleitungen ausgestaltet, die zur gleichzeitigen Energie- und Datenübertragung vorgesehen sind. Darüber hinaus können das Schnittstellenelement 102 und das Steuerungselement 103 vorteilhafterweise für Ethernet Advanced Physical Layer (Ethernet APL) ausgestaltet sein.

## Patentansprüche

1. Vorrichtung zum Anschluss eines Kommunikationsgeräts (100) an ein 2-Draht- oder an ein 8-Ader-Ethernet-Kommunikationssystem mit
- einem Schnittstellenelement (102) zur Verbindung mit einer 8 Kontakte umfassenden Anschlussbuchse (101) für einen mit einer Kommunikationsleitung verbundenen Stecker (C8, C4, C2),
- einem mit dem Schnittstellenelement (102) verbundenen und mit dem Kommunikationsgerät (100) verbindbaren Steuerungselement (103) zur Erzeugung zumindest eines Signals (S1, S2) für eine Umschaltung eines Betriebsmodus des Kommunikationsgeräts,
- wobei das Steuerungselement (103) zur Ermittlung einer Belegung der Kontakte der Anschlussbuchse (101) durch einen in die Anschlussbuchse gesteckten Stecker (C8, C4, C2) eingerichtet ist,
- wobei das Steuerungselement (103) dazu eingerichtet ist, zumindest bei Belegung eines ersten (1) und zweiten Kontakts (2) sowie eines dritten (3) und sechsten Kontakts (6) ein erstes Signal (S1) für einen Ethernet-Betriebsmodus des Kommunikationsgeräts (100) mit mehreren Aderpaaren (801-804, 401-402) zu erzeugen,
- wobei das Steuerungselement (103) dazu eingerichtet ist, bei Belegung nur des dritten (3) und sechsten Kontakts (6) ein zweites Signal (S2) für einen 2-Draht-Betriebsmodus des Kommunikationsgeräts (100) zu erzeugen.

2. Vorrichtung nach Anspruch 1,
bei der das Steuerungselement (103) dazu eingerichtet ist, bei Belegung des ersten (1) und zweiten Kontakts 2, des dritten (3) und sechsten Kontakts (6), eines vierten (4) und fünften Kontakts (5) sowie eines siebten (7) und achten Kontakts (8) das erste Signal (S1) zu erzeugen.

3. Vorrichtung nach Anspruch 1 oder 2,
bei der das Steuerungselement (103) dazu eingerichtet ist, das erzeugte erste (S1) oder zweite Signal (S2) an das Kommunikationsgerät (100) zu senden.

4. Vorrichtung nach einem der Ansprüche 1 bis 3,
bei der das Schnittstellenelement (102) eine galvanische Trennung gegenüber der Anschlussbuchse (101) umfasst.

5. Vorrichtung nach einem der Ansprüche 1 bis 4,
bei der die Anschlussbuchse (101) ein RJ45-Steckverbindungselement ist und bei der die Kontakte (1-8) des Anschlussbuchse hinsichtlich ihrer Nummerierung RJ45-Pin-Positionen entsprechen.

6. Vorrichtung nach Anspruch 5,
bei der die Anschlussbuchse (101) zur Aufnahme von Steckern entsprechend IEC 60603-7 ausgestaltet ist.

7. Vorrichtung nach einem der Ansprüche 1 bis 6,
bei der eine Datenübermittlung im Ethernet-Betriebsmodus mit mehreren Aderpaaren entsprechend einem Ethernet-Standard für Kupferkabel mit mindestens 4 Adern erfolgt und bei der die Datenübermittlung im 2-Draht-Betriebsmodus entsprechend einem Single Pair Ethernet-Standard erfolgt.

8. Vorrichtung nach Anspruch 7,
bei dem durch die Umschaltung des Betriebsmodus eine Kommunikation gemäß ISO/IEC 11801 für 1-, 2- und 4-paarige Kupferverbindungen (801-804, 401-402, 201) unterstützt wird.

9. Vorrichtung nach einem der Ansprüche 1 bis 8,
bei der das Schnittstellenelement (102) zur Verbindung mit gemultiplexten Versorgungs- und Kommunikationsleitungen ausgestaltet ist, die zur gleichzeitigen Energie- und Datenübertragung vorgesehen sind.

10. Vorrichtung nach einem der Ansprüche 1 bis 9,
bei der das Schnittstellenelement (102) und das Steuerungselement (103) für Ethernet Advanced Physical Layer ausgestaltet sind.

11. Vorrichtung nach einem der Ansprüche 1 bis 10,
bei der das Schnittstellenelement (102) und das Steuerungselement (103) als in ein Kommunikationsgerät (100) integrierte Komponenten ausgestaltet sind.

12. Kommunikationsgerät, umfassend eine Vorrichtung nach einem der Ansprüche 1 bis 11 mit einem Schnittstellenelement (102) und einem Steuerungselement (103), zum Anschluss an ein 2-Draht- oder an ein 8-Ader-Ethernet-Kommunikationssystem mit
- zumindest einer 8 Kontakte (1-8) umfassenden Anschlussbuchse (101) für einen mit einer Kommunikationsleitung verbundenen Stecker (C8, C4, C2),
- zumindest einer Sicherungsschicht-Funktionseinheit (104),
- wobei die Anschlussbuchse (101) mit dem Schnittstellenelement (102) verbunden ist,
- wobei die Sicherungsschicht-Funktionseinheit (104) mit dem Schnittstellenelement (102) und mit dem Steuerungselement (103) verbunden ist,
- wobei die Sicherungsschicht-Funktionseinheit (104) dazu eingerichtet ist, bei Empfang eines ersten Signals (S1) vom Steuerungselement einen Ethernet-Betriebsmodus mit mehreren Aderpaaren einzustellen und bei Empfang eines zweiten Signals (S2) vom Steuerungselement einen 2-Draht-Betriebsmodus einzustellen.

13. Kommunikationsgerät nach Anspruch 12,
bei dem das Kommunikationsgerät ein Switch mit mehreren Anschlussbuchsen oder ein Feldgerät eines industriellen Automatisierungssystems ist.

## Claims

1. Device for connecting a communication device (100) to a 2-wire or an 8-wire Ethernet communication system having
- an interface element (102) for connecting to a connector (101) comprising 8 contacts for a plug (C8, C4, C2) connected to a communication line,
- a control element (103) connected to the interface element (102) and connectable to the communication device (100) for generating at least one signal (S1, S2) for switching an operating mode of the communication device,
- wherein the control element (103) is designed to determine an occupancy of the contacts of the connector (101) by means of a plug (C8, C4, C2) plugged into the connector,
- wherein the control element (103) is designed to generate a first signal (S1) for an Ethernet operating mode of the communication device (100) with a number of wire pairs (801-804, 401-402) at least upon occupancy of a first (1) and second contact (2) and a third (3) and sixth contact (6),
- wherein the control element (103) is designed to generate a second signal (S2) for a 2-wire operating mode of the communication device (100) upon occupancy of just the third (3) and sixth contact (6).

2. Device according to claim 1,
in which the control element (103) is designed to generate the first signal (S1) upon occupancy of the first (1) and second contact (2), the third (3) and sixth contact (6), a fourth (4) and fifth contact (5) and a seventh (7) and eighth contact (8) .

3. Device according to claim 1 or 2,
in which the control element (103) is designed to send the generated first (S1) or second signal (S2) to the communication device (100).

4. Device according to one of claims 1 to 3,
in which the interface element (102) comprises a galvanic separation with respect to the connector (101).

5. Device according to one of claims 1 to 4,
in which the connector (101) is an RJ45 plug connection element and in which the contacts (1-8) of the connector correspond in respect of their numbering to RJ45 pin positions.

6. Device according to claim 5,
in which the connector (101) is designed to receive plugs according to IEC 60603-7.

7. Device according to one of claims 1 to 6,
in which a data transmission in the Ethernet operating mode with several wire pairs takes place according to an Ethernet standard for copper cables with at least 4 wires and in which the data transmission in the 2-wire operating mode takes place according to a single pair Ethernet standard.

8. Device according to claim 7,
in which by switching the operating mode, a communication according to ISO/IEC 11801 for 1-, 2- and 4-pair copper connections (801-804, 401-402, 201) is supported.

9. Device according to one of claims 1 to 8,
in which the interface element (102) is designed to connect to multiplexed supply and communication lines which are provided to transmit energy and data simultaneously.

10. Device according to one of claims 1 to 9,
in which the interface element (102) and the control element (103) are designed for Ethernet Advanced Physical Layer.

11. Device according to one of claims 1 to 10,
in which the interface element (102) and the control element (103) are designed as components integrated into a communication device (100).

12. Communication device, comprising a device according to one of claims 1 to 11 with an interface element (102) and a control element (103), for connection to a 2-wire or an 8-wire Ethernet communication system with
- at least one connector (101) comprising 8 contacts (1-8) for a plug (C8, C4, C2) connected to a communication line,
- at least one security layer functional unit (104),
- wherein the connector (101) is connected to the interface element (102),
- wherein the security layer functional unit (104) is connected to the interface element (102) and to the control element (103),
- wherein the security layer functional unit (104) is designed upon receipt of a first signal (S1) from the control element to adjust an Ethernet operating mode with a number of wire pairs and to adjust a 2-wire operating mode upon receipt of a second signal (S2) from the control element.

13. Communication device according to claim 12,
in which the communication device is a switch with a number of connectors or a field device of an industrial automation system.

## Revendications

1. Dispositif de connexion d'un appareil (100) de communication à un système de communication ethernet à 2 fils ou à un système de communication ethernet à 8 fils comprenant
- un élément (102) d'interface pour la liaison à une prise (101) de connexion comprenant 8 contacts pour un connecteur (C8, C4, C2) relié à une ligne de communication,
- un élément (103) de commande relié à l'élément (102) d'interface et pouvant être relié à l'appareil (100) de communication pour la production d'au moins un signal (S1, S2) pour une commutation d'un mode de fonctionnement de l'appareil de communication,
- dans lequel l'élément (103) de commande est agencé pour la détermination d'une occupation des contacts de la prise (101) de connexion par un connecteur (C8, C4, C2) enfiché dans la prise de connexion,
- dans lequel l'élément (103) de commande est agencé pour, au moins lors de l'occupation d'un premier (1) et d'un deuxième contacts (2) ainsi que d'un troisième (3) et d'un sixième contacts (6), produire un premier signal (S1) pour un mode de fonctionnement ethernet de l'appareil (100) de communication avec plusieurs paires (801-804, 401-402) de fils,
- dans lequel l'élément (103) de commande est agencé pour produire, lors de l'occupation de seulement le troisième (3) et le sixième contacts (6), un deuxième signal (S2) pour un mode de fonctionnement à deux fils de l'appareil (100) de communication.

2. Dispositif suivant la revendication 1,
dans lequel l'élément (103) de commande est agencé pour produire le premier signal (S1) lors de l'occupation du premier (1) et du deuxième contacts (2), du troisième (3) et du sixième contacts (6), d'un quatrième (4) et d'un cinquième contact (5), ainsi que d'un septième (7) et d'un huitième contacts (8).

3. Dispositif suivant la revendication 1 ou 2,
dans lequel l'élément (103) de commande est agencé pour envoyer le premier (S1) ou le deuxième signal (S2) produit à l'appareil (100) de communication.

4. Dispositif suivant l'une des revendications 1 à 3,
dans lequel l'élément (102) d'interface comprend une séparation galvanique par rapport à la prise (101) de connexion.

5. Dispositif suivant l'une des revendications 1 à 4,
dans lequel la prise (101) de connexion est un élément de liaison par enfichage RJ45 et dans lequel les contacts (1-8) de la prise de connexion correspondent en ce qui concerne leurs numérotations aux positions de pin RJ45.

6. Dispositif suivant la revendication 5,
dans lequel la prise (101) de connexion est conformée pour la réception de connecteurs conformément à IEC 60603-7.

7. Dispositif suivant l'une des revendications 1 à 6,
dans lequel une transmission de données, dans le mode de fonctionnement ethernet avec plusieurs paires de fils, s'effectue conformément à une norme ethernet pour un câble de cuivre ayant au moins 4 fils et dans lequel la transmission de données, dans le mode de fonctionnement à 2 fils, s'effectue conformément à une norme ethernet single pair.

8. Dispositif suivant la revendication 7,
dans lequel, par la commutation du mode de fonctionnement, on soutient une communication suivant ISO/IEC 11801 pour des liaisons (801-804, 401-402, 201) de cuivre à 1, 2 et 4 paires.

9. Dispositif suivant l'une des revendications 1 à 8,
dans lequel l'élément (102) d'interface est conformé pour la liaison à des lignes multiplexées d'alimentation et de communication, qui sont prévues pour le transport d'énergie et la transmission de données de manière simultanée.

10. Dispositif suivant l'une des revendications 1 à 9,
dans lequel l'élément (102) d'interface et l'élément (103) de commande est conformé pour l'ethernet advanced physical layer.

11. Dispositif suivant l'une des revendications 1 à 10,
dans lequel l'élément (102) d'interface et l'élément (103) de commande sont conformés sous la forme d'un composant à intégrer dans l'appareil (100) de communication.

12. Appareil de communication comprenant un dispositif suivant l'une des revendications 1 à 11, ayant un élément (102) d'interface et un élément (103) de commande, pour la connexion à un système de communication ethernet à 2 fils ou à 8 fils, comprenant
- au moins une prise (101) de connexion comprenant 8 contacts (1-8) pour un connecteur (C8, C4, C2) relié à une ligne de communication,
- au moins une unité (104) fonctionnelle de couche de sécurisation,
- dans lequel la prise (101) de connexion est reliée à l'élément (102) d'interface,
- dans lequel l'unité (104) fonctionnelle de couche de sécurisation est reliée à l'élément (102) d'interface et à l'élément (103) de commande,
- dans lequel l'unité (104) fonctionnelle à couche de sécurisation est agencée pour établir, à la réception d'un premier signal (S1) de l'élément de commande, un mode de fonctionnement ethernet avec plusieurs paires de fils et, à la réception d'un deuxième signal (S2) de l'élément de commande, un mode de fonctionnement à 2 fils.

13. Appareil de communication suivant la revendication 12, dans lequel l'appareil de communication est un switch ayant plusieurs prises de connexion ou un appareil sur site d'un système d'automatisation industriel.
